# EUROPÄISCHE PATENTSCHRIFT

(11) **EP 2 527 685 B1**
(45) Veröffentlichungstag und Bekanntmachung des Hinweises auf die Patenterteilung: **02.09.2015**
(21) Anmeldenummer: 12163837.3
(22) Anmeldetag: 12.04.2012
(51) Int. Cl.: F16G 13/16, H02G 11/00

(54) **Kettenglied für eine Energieführungskette**
Chain member for an energy supply chain
Maillon de chaîne pour une chaîne de guidage d'énergie

(30) Priorität: 25.05.2011 DE 102011103147
(43) Veröffentlichungstag der Anmeldung: 28.11.2012
(73) Patentinhaber: Murrplastik Systemtechnik GmbH, 71570 Oppenweiler (DE)
(72) Erfinder:
(74) Vertreter: Reule, Hanspeter

(56) Entgegenhaltungen:
- WO-A1-98/28556
- DE-A1-102008 015 954
- DE-U1- 20 016 363
- DE-U1-202005 005 763
- GB-A- 2 200 716

## Beschreibung

Die Erfindung betrifft ein Kettenglied für eine Energieführungskette gemäß Oberbegriff der Ansprüche 1,8 und 9.

Energieführungsketten dienen der Aufnahme von Versorgungsleitungen, insbesondere von elektrischen Kabeln, die von einem stationären Anschluss zu einer beweglichen Maschine geführt sind. Die Energieführungskette nimmt die Leitungen in ihrem Inneren auf und schützt sie. Sie ist aus einer Vielzahl von in einer Längsrichtung hintereinander angeordneten und gelenkig miteinander verbundenen, gegeneinander begrenzt verschwenkbaren Kettengliedern aufgebaut. Die Kettenglieder weisen meist zwei parallel zueinander sich in Längsrichtung erstreckende Seitenglieder, die die Seitenwände des Kettenglieds bilden, sowie einen unteren und einen oberen Rahmensteg auf, wobei die Rahmenstege quer zur Längsrichtung verlaufen und die Seitenglieder miteinander verbinden. Die Seitenglieder und die Rahmenstege schließen einen Leitungsführungskanal ein, in dem die Leitungen aufgenommen sind. Bei einigen Anwendungsfällen ist es notwendig, zusätzlich zu den in der Energieführungskette aufgenommenen Versorgungsleitungen eine zusätzliche Leitung mit großem Querschnitt zu der beweglichen Maschine zu führen. Dies kann beispielsweise eine Druckluftleitung sein oder ein Wellschlauch, der mehrere Leitungen aufnimmt. Auch eine Kühlmittelleitung kann einen überdurchschnittlich großen Querschnitt aufweisen. Zur Führung solcher Leitungen, deren Querschnitt größer sein kann als der Querschnitt der Energieführungskette, wurde bereits eine Energieführungskette vorgeschlagen, deren Kettenglieder mit Bügeln versehen sind, die eine Erweiterung des Nutzquerschnitts bilden (vgl. DE 197 15 532 C1). Die Bügel werden mittels sich parallel zu den Rahmenstegen erstreckenden Befestigungsbereichen direkt an den Seitengliedern befestigt.

Zu diesem Zweck müssen die Seitenglieder mit Befestigungsmitteln für die Bügel versehen sein und die Bügel müssen entsprechende Befestigungsbereiche aufweisen. Dies kann einen erhöhten Fertigungsaufwand nach sich ziehen.

Aus der GB 2 200 716 A ist ein Kettenglied für eine Energieführungskette der eingangs genannten Art bekannt, das die Möglichkeit zur Aufnahme von Kabeln großen Durchmessers bietet. Die Kabel werden mittels Kabelbindern fixiert. Aus der DE 20 2005 005 763 U1 ist zudem ein Kettenglied für eine Energieführungskette der eingangs genannten Art bekannt, an dessen oberem Rahmensteg ein Dämpfungsmittel angeordnet ist, das mit dem Rahmensteg einen zweiseitig offenen Kanal einschließt. Der Rahmensteg muss aber mit Befestigungsmitteln für das Dämpfungsmittel ausgestattet sein, so dass die Herstellung des Kettenglieds aufwendig ist.

Daher ist die Aufgabe der Erfindung, ein Kettenglied der eingangs genannten Art derart weiterzubilden, dass es eine einfachere Befestigung des Erweiterungsbügels ermöglicht.

Diese Aufgabe wird erfindungsgemäß durch ein Kettenglied mit den Merkmalen des Anspruchs 1, alternativ herzu durch ein Kettenglied mit den Merkmalen des Anspruchs 8 bzw. des Anspruchs 9 gelöst. Vorteilhafte Weiterbildungen der Erfindung sind Gegenstand der abhängigen Ansprüche.

Der Erfindung liegt der Gedanke zugrunde, einen Erweiterungsbügel vorzusehen, der der Aufnahme einer Leitung großen Querschnitts dient, und der auf einfache Weise an einem der Rahmenstege befestigt wird. Der Erweiterungsbügel wird lösbar am Rahmensteg befestigt, so dass die Kettenglieder auch mit dem Erweiterungsbügel nachgerüstet werden können und dieser wieder abgenommen werden kann, wenn die Führung der Leitung mit großem Querschnitt nicht mehr erforderlich ist. Durch die Befestigung am Rahmensteg im Abstand zu den Seitengliedern ist eine Verbindung des Erweiterungsbügels mit den Seitengliedern nicht erforderlich, so dass die Seitenglieder keine Befestigungsmittel zur Befestigung des Erweiterungsbügels aufweisen müssen. Der Erweiterungsbügel weist zwei freie Enden auf, die auf den jeweiligen Rahmensteg aufgesetzt sind und die jeweils mit einem Befestigungselement lösbar verbunden sind, so dass der jeweilige Rahmensteg rings umgriffen wird. Dies stellt eine besonders einfache Befestigungsart dar, die auch bei Standardkettengliedern zur Anwendung kommen kann. Der Erweiterungsbügel und die Befestigungselemente müssen dann nur an die Rahmenstege angepasst werden und können dann ohne weitere Veränderung der Rahmenstege an diesen montiert werden. Alternativ hierzu ist es auch möglich, dass die freien Enden des Erweiterungsbügels jeweils mit einem Befestigungselement lösbar verbunden sind, welches am jeweiligen Rahmensteg befestigt ist. Dabei ist erfindungsgemäß vorgesehen, dass die Verbindungen zwischen den freien Enden und den Befestigungselementen jeweils zwei den jeweiligen Rahmensteg beidseitig umgreifende, an ihren freien Enden jeweils einen Rasthaken tragende Rastzungen und von den Rasthaken hintergriffene Querflächen aufweisen. Eine solche Rastverbindung ist einfach herstellbar, hinreichend stabil und kann zudem auf einfache Weise wieder gelöst werden.

Zweckmäßig ist der Erweiterungsbügel nach einer Seite hin offen und schließt mit dem betreffenden Rahmensteg einen Aufnahmekanal für die mindestens eine Leitung ein. Dabei wird der ohnehin vorhandene Rahmensteg als Begrenzung des Aufnahmekanals genutzt, so dass am Erweiterungsbügel Material eingespart werden kann.

Gemäß einer vorteilhaften Ausführungsform sind die Seitenglieder mittels eines unteren und eines oberen Rahmenstegs miteinander verbunden, wobei die Rahmenstege zusammen mit den Seitengliedern einen sich in Längsrichtung erstreckenden Leitungsführungskanal einschließen, und der Erweiterungsbügel ist auf der dem Leitungsführungskanal abgewandten Oberseite des oberen Rahmenstegs aufgesetzt. Der Erweiterungsbügel stellt dann eine reine Erweiterung des Querschnitts dar, so dass die in ihm aufgenommene Leitung zusätzlich zu den im Leitungsführungskanal geführten Leitungen geführt wird. Alternativ hierzu ist es auch möglich, dass die Seitenglieder lediglich mittels eines unteren Rahmenstegs miteinander verbunden sind und mit dem unteren Rahmensteg eine Baugruppe mit U-förmigem oder H-förmigem Querschnitt bilden und dass der Erweiterungsbügel im Bereich zwischen den Seitengliedern auf dem unteren Rahmensteg aufgesetzt ist. Dadurch wird das Kettenglied umfunktioniert, indem der bei einer Ausbildung mit zwei Rahmenstegen von diesem umrahmte Leitungsführungskanal durch den Aufnahmekanal ersetzt wird. Sinnvoll ist diese Anordnung vor allem dann, wenn statt mehrerer Leitungen geringen Querschnitts eine Leitung mit großem Querschnitt geführt werden soll und dabei auf Standardbauteile zurückgegriffen werden soll. Die U-förmige Baugruppe aus Seitengliedern und unterem Rahmensteg stellt ein solches Standardbauteil dar. Dabei kann der Erweiterungsbügel mittels jeweils eines im Abstand zum unteren Rahmensteg parallel zu diesem verlaufenden oberen Teilrahmenstegs mit jedem der beiden Seitenglieder verbunden sein, so dass die Stabilität der Anordnung erhöht wird.

Der Erweiterungsbügel oder die Befestigungselemente einerseits und der mit dem Erweiterungsbügel verbundene Rahmensteg andererseits können zusätzlich oder alternativ zur oben dargestellten erfindungsgemäßen Ausgestaltung miteinander in Eingriff befindliche Vorsprünge bzw. Vertiefungen aufweisen. Dabei wird bevorzugt, dass die Vorsprünge am Erweiterungsbügel oder an den Befestigungselementen angeordnet sind, während die Vertiefungen am Rahmensteg angeordnet sind. Durch das Zusammenwirken der Vorsprünge und Vertiefungen wird der Erweiterungsbügel am Rahmensteg fixiert, so dass er auch in der Längsrichtung des Rahmenstegs, die der Querrichtung des Kettenglieds entspricht, nicht verschiebbar ist. Solche Vertiefungen sind im Übrigen oftmals an den Rahmenstegen von Standardkettengliedern bereits vorhanden, um den Leitungsführungskanal in Teilkanäle unterteilende Trennstege befestigen zu können.

Die erfindungsgemäßen Kettenglieder werden zu einer Energieführungskette zusammengesetzt, wobei es möglich ist, dass jedes Kettenglied mit dem Erweiterungsbügel ausgestattet ist. Es ist jedoch auch möglich, mit dem Erweiterungsbügel ausgestattete Kettenglieder in bestimmten Abständen in die Energieführungskette zu integrieren und die dazwischen liegenden Kettenglieder ohne Erweiterungsbügel auszubilden. Dies ist insbesondere dann möglich, wenn die vom Erweiterungsbügel umschlossene Leitung einen großen Querschnitt, aber ein geringes Gewicht aufweist.

Im Folgenden wird die Erfindung anhand zweier in der Zeichnung schematisch dargestellter Ausführungsbeispiele näher erläutert. Es zeigen
- Fig. 1: Eine Energieführungskette gemäß einem ersten Ausführungsbeispiel in perspektivischer Ansicht;
- Fig. 2: einen Abschnitt der Energieführungskette gemäß Fig. 1;
- Fig. 3: einen Abschnitt gemäß Fig. 2 mit abgenommenem Erweiterungsbügel;
- Fig. 4: ein Kettenglied für eine Energieführungskette gemäß einem zweiten Ausführungsbeispiel und
- Fig. 5: das Kettenglied gemäß Fig. 4 mit abgenommenem Erweiterungsbügel.

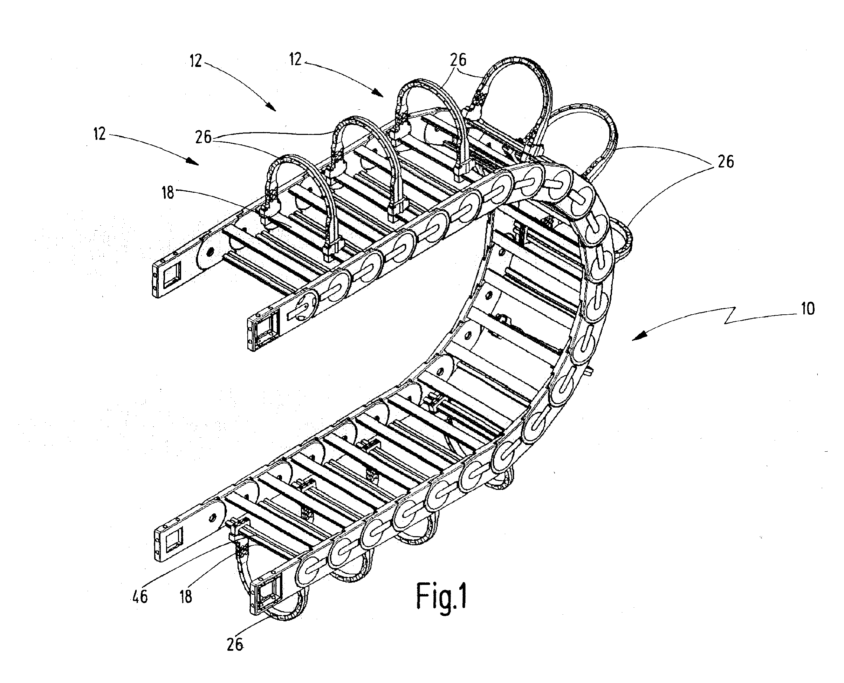

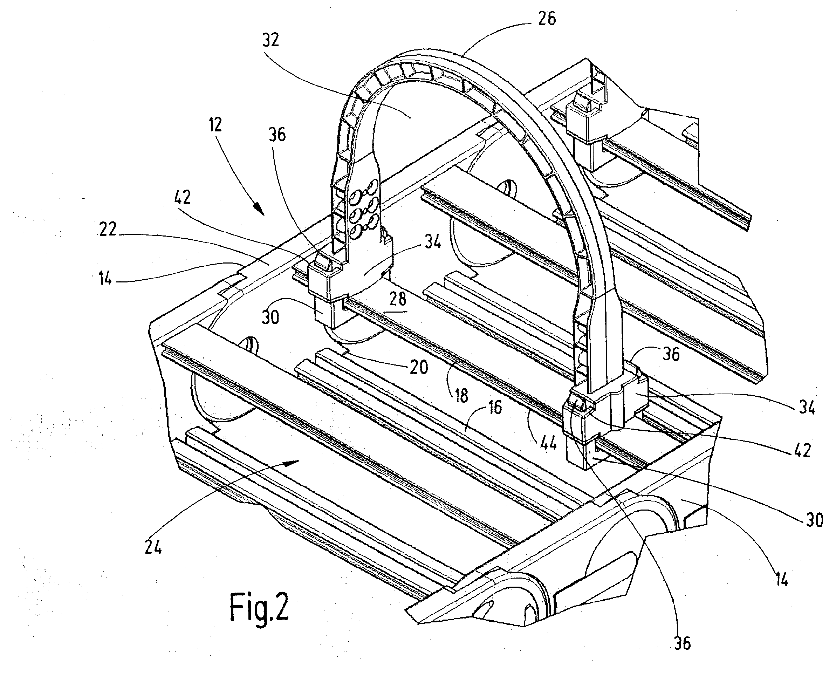

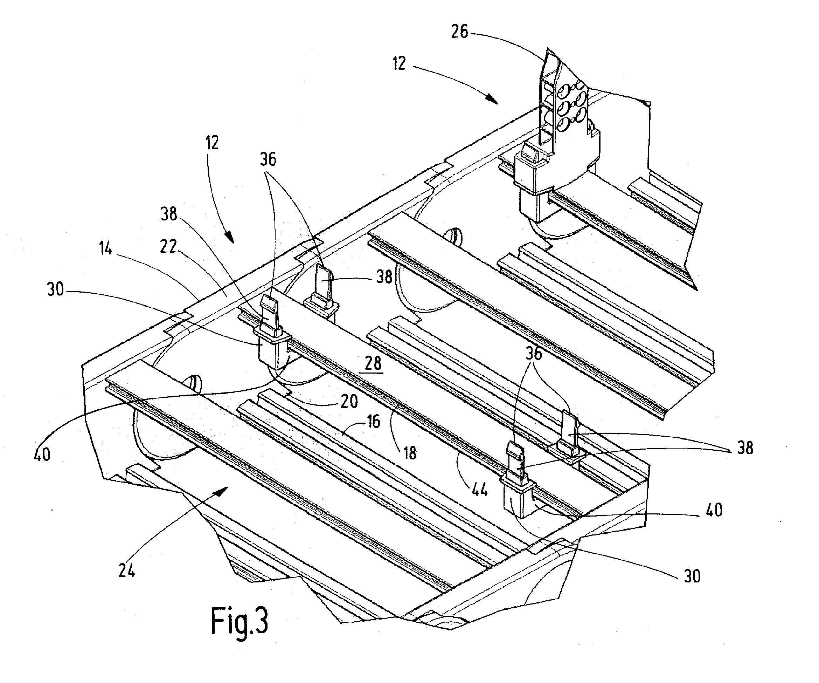

Die in Fig. 1 dargestellte Energieführungskette 10 weist eine Vielzahl von in einer Kettenlängsrichtung aneinander gereihten, gelenkig miteinander verbundenen und um senkrecht zur Kettenlängsrichtung verlaufende Schwenkachsen begrenzt gegeneinander verschwenkbaren Kettengliedern 12 auf. Jedes der Kettenglieder 12 weist, wie in Fig. 2, 3 im Detail dargestellt ist, zwei im Abstand voneinander angeordnete, sich in Kettenlängsrichtung parallel zueinander erstreckende Seitenglieder 14 auf. In der quer zur Kettenlängsrichtung und parallel zu den Schwenkachsen verlaufenden Querrichtung erstrecken sich ein unterer und ein oberer Rahmensteg 16,18, die die beiden Seitenglieder 14 miteinander verbinden. Senkrecht zur Kettenlängsrichtung und zur Querrichtung erstrecken sich die Seitenglieder 14 jeweils von einer Unterseite 20 bis zu einer Oberseite 22. Die Seitenglieder 14 und die Rahmenstege 16,18 schließen einen Leitungsführungskanal 24 ein, der der Aufnahme von in der Energieführungskette 10 in deren Kettenlängsrichtung geführten Leitungen dient.

Jedes zweite der Kettenglieder 12 weist einen Erweiterungsbügel 26 auf, der über die Oberseite 22 der Seitenglieder 14 übersteht und der Aufnahme einer Leitung größeren Durchmessers dient. Der Erweiterungsbügel 26 ist auf die dem Leitungsführungskanal 24 abgewandte Oberseite 28 des oberen Rahmenstegs 18 aufgesetzt und mittels zweier Befestigungselemente 30 im Abstand zu den Seitengliedern 14 am oberen Rahmensteg 18 befestigt. Er weist einen im wesentlichen halbkreisförmigen Querschnitt auf und ist nach unten hin offen, so dass ein Aufnahmekanal 32 für die Leitung nach oben und zur Seite hin durch den Erweiterungsbügel 26 und nach unten hin durch den oberen Rahmensteg 18 begrenzt wird. Der Erweiterungsbügel 26 ruht mit seinen freien Enden 34 auf dem oberen Rahmensteg 18, während die Befestigungselemente 30 U-förmig ausgebildet sind mit jeweils zwei an ihren freien Enden Rasthaken 36 aufweisenden Rastzungen 38, die mittels einer Basis 40 miteinander verbunden sind. Die Rasthaken 36 hintergreifen Querflächen 42 an den freien Enden 34 des Erweiterungsbügels 26, so dass der obere Rahmensteg 18 jeweils voll umfänglich von den freien Enden 34 und den Befestigungselementen 30 umgriffen wird. An der dem Leitungsführungskanal 24 zugewandten Unterseite 44 weist der obere Rahmensteg 28 eine Reihe von Vertiefungen 46 auf, in die von den Befestigungselementen 30 an deren Basis 40 nach oben vorstehende Vorsprünge eingreifen, so dass der Erweiterungsbügel 26 auch in Längsrichtung des oberen Rahmenstegs 18 fixiert ist. Ein Lösen der Verbindung zwischen dem Erweiterungsbügel 26 und dem oberen Rahmensteg 18 erfolgt einfach dadurch, dass bei jedem der Befestigungselemente 30 die Rastzungen 38 aufeinander zu gebogen werden, so dass die Rasthaken 36 von den Querflächen 42 entfernt werden und die Befestigungselemente 30 vom Erweiterungsbügel 26 gelöst werden können.

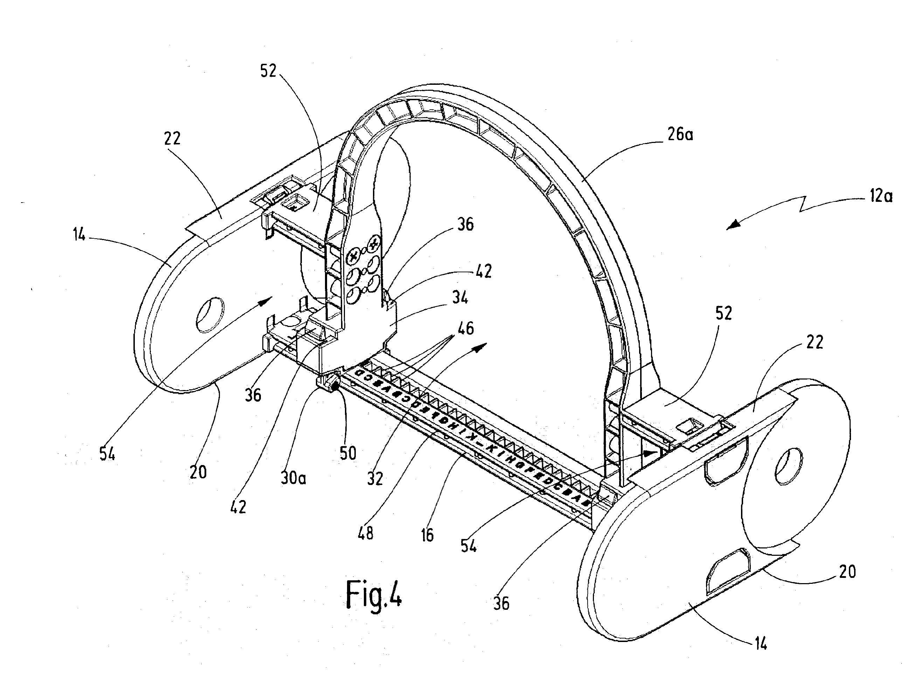

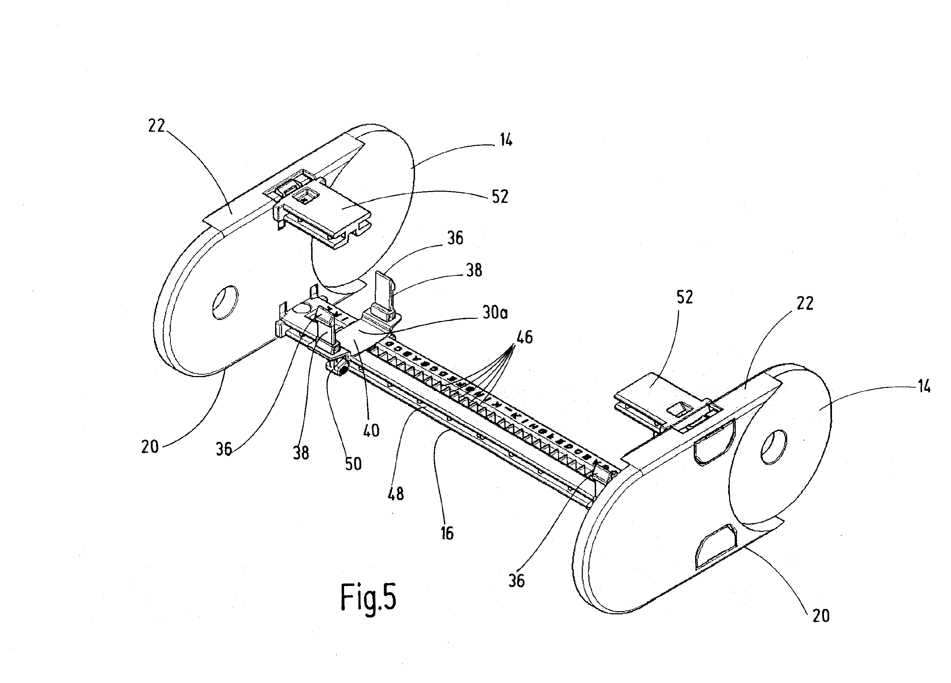

Bei dem Kettenglied 12a gemäß dem alternativen Ausführungsbeispiel (Fig. 4, 5) ist ebenfalls ein in seiner Form mit dem Erweiterungsbügel 26 identischer Erweiterungsbügel 26a vorgesehen und auch weitere Ausführungsdetails entsprechend dem ersten Ausführungsbeispiel, so dass gleiche Bauteile mit gleichen Bezugszeichen versehen sind. Bei dem Kettenglied 12a gemäß dem zweiten Ausführungsbeispiel fehlt jedoch der obere Rahmensteg, so dass die Seitenglieder 14 mit dem unteren Rahmensteg 16 eine im Wesentlichen in Kettenlängsrichtung betrachtet U-förmige Baueinheit bilden. Der Erweiterungsbügel 26a schließt hier zusammen mit dem unteren Rahmensteg 16, auf dessen Oberseite er aufgesetzt ist, den Aufnahmekanal 32 ein. Die Befestigungselemente 30a weisen ebenfalls Rastzungen 38 und Rasthaken 36 auf wie die Befestigungselemente 30 des ersten Ausführungsbeispiels. Sie umgreifen jedoch den unteren Rahmensteg 16 nicht, sondern sind auf ihn aufgesetzt und mittels seitlich in Rinnen 48 im unteren Rahmensteg 16 eingreifenden Raststücken 50 befestigt. Sie können vom unteren Rahmensteg 16 gelöst werden, in dem die Raststücke 50 nach außen gebogen und mit den Rinnen 48 außer Eingriff gebracht werden. Die Befestigungselemente 30a sind auf dem unteren Rahmensteg 16 aufgesetzt und der Erweiterungsbügel 26a ist an seinen freien Enden 34 mit den Befestigungselementen 30a verrastet.

Im Abstand zum unteren Rahmensteg 16 weist das Kettenglied 12a zwei parallel zum unteren Rahmensteg 16 verlaufende Teilrahmenstege 52 auf, die ein Verbindungsstück zwischen dem jeweiligen Seitenglied 14 und dem Erweiterungsbügel 26a bilden. Der Leitungsführungskanal 24 des ersten Ausführungsbeispiels ist im zweiten Ausführungsbeispiel somit durch den Aufnahmekanal 32 und zwei neben dem Aufnahmekanal 32 verlaufende, jeweils durch eines der Seitenglieder 14, den unteren Rahmensteg 16, den Erweiterungsbügel 26a und einen der Teilrahmenstege 52 eingeschlossene Teilkanäle 54 ersetzt.

Zusammenfassend ist folgendes festzuhalten: Die Erfindung betrifft ein Kettenglied 12,12a für eine Energieführungskette 10 mit zwei im Abstand zueinander angeordneten, sich in einer Längsrichtung zueinander parallel und in einer Höhenerstreckung von einer Unterseite 20 bis zu einer Oberseite 22 erstreckenden Seitengliedern 14, mit mindestens einem die Seitenglieder 14 miteinander verbindenden, quer zur Längsrichtung und zur Höhenerstreckung verlaufenden Rahmensteg 16,18 und mit einem über die Oberseiten 22 der Seitenglieder 14 überstehenden Erweiterungsbügel 26,26a zur Aufnahme mindestens einer Leitung. Erfindungsgemäß ist vorgesehen, dass der Erweiterungsbügel 26,26a im Abstand zu den Seitengliedern 14 mit dem Rahmensteg 16 bzw. mit einem der Rahmenstege 18 lösbar verbunden ist.

### Bezugszeichenliste

- 10: Energieführungskette
- 12,12a: Kettenglieder
- 14: Seitenglieder
- 16,18: Rahmenstege
- 20: Unterseite
- 22: Oberseite
- 24: Leitungsführungskanal
- 26,26a: Erweiterungsbügel
- 28: Oberseite
- 30,30a: Befestigungselement
- 32: Aufnahmekanal
- 34: freie Enden
- 36: Rasthaken
- 38: Rastzungen
- 40: Basis
- 42: Querflächen
- 44: Unterseite
- 46: Vertiefung
- 48: Rinne
- 50: Raststück
- 52: Teilrahmensteg
- 54: Teilkanal

## Patentansprüche

1. Kettenglied für eine Energieführungskette mit zwei im Abstand zueinander angeordneten, sich in einer Längsrichtung zueinander parallel und in einer Höhenerstreckung von einer Unterseite (20) bis zu einer Oberseite (22) erstreckenden Seitengliedern (14), mit mindestens einem die Seitenglieder (14) miteinander verbindenden, quer zur Längsrichtung und zur Höhenerstreckung verlaufenden Rahmensteg (16,18) und mit einem über die Oberseiten (22) der Seitenglieder (14) überstehenden Erweiterungsbügel (26,26a) zur Aufnahme mindestens einer Leitung, welcher im Abstand zu den Seitengliedern (14) mit dem Rahmensteg (16) bzw. mit einem der Rahmenstege (18) lösbar verbunden ist und zwei freie Enden (34) aufweist, **dadurch gekennzeichnet, dass** die freien Enden (34) entweder auf dem jeweiligen Rahmensteg (18) aufgesetzt und jeweils mit einem Befestigungselement (30) lösbar verbunden sind, so dass der jeweilige Rahmensteg (18) rings umgriffen wird, oder dass die freien Enden (34) jeweils mit einem Befestigungselement (30a) lösbar verbunden sind, welches am jeweiligen Rahmensteg (16) befestigt ist, und dass die Verbindungen zwischen den freien Enden (34) und den Befestigungselementen (30,30a) jeweils zwei an ihren freien Enden jeweils einen Rasthaken (36) tragende Rastzungen (38) und von den Rasthaken (36) hintergriffene Querflächen (42) aufweisen.

2. Kettenglied nach Anspruch 1, **dadurch gekennzeichnet, dass** der Erweiterungsbügel (26,26a) nach einer Seite hin offen ist und mit dem betreffenden Rahmensteg (16,18) einen Aufnahmekanal (32) für die mindestens eine Leitung einschließt.

3. Kettenglied nach Anspruch 1 oder 2, **dadurch gekennzeichnet, dass** die Seitenglieder (14) mittels eines unteren und eines oberen Rahmenstegs (16,18) miteinander verbunden sind, die zusammen mit den Seitengliedern (14) einen sich in Längsrichtung erstreckenden Leitungsführungskanal (24) einschließen, und dass der Erweiterungsbügel (26) auf der dem Leitungsführungskanal (24) abgewandten Oberseite (28) des oberen Rahmenstegs (18) ruht.

4. Kettenglied nach Anspruch 1 oder 2, **dadurch gekennzeichnet, dass** die Seitenglieder (14) mittels eines unteren Rahmenstegs (16) miteinander verbunden sind und mit dem unteren Rahmensteg (16) eine Baugruppe mit U-förmigem oder H-förmigem Querschnitt bilden und dass der Erweiterungsbügel (26a) im Bereich zwischen den Seitengliedern (14) auf dem unteren Rahmensteg (16) ruht.

5. Kettenglied nach Anspruch 4, **dadurch gekennzeichnet, dass** der Erweiterungsbügel (26a) mittels jeweils eines im Abstand zum unteren Rahmensteg (16) parallel zu diesem verlaufenden oberen Teilrahmenstegs (52) mit jedem der beiden Seitenglieder (14) verbunden ist.

6. Kettenglied nach einem der vorangehenden Ansprüche, **dadurch gekennzeichnet, dass** der Erweiterungsbügel (26,26a) oder die Befestigungselemente (30,30a) einerseits und der mit dem Erweiterungsbügel (26,26a) verbundene Rahmensteg (16,18) andererseits miteinander in Eingriff befindliche Vorsprünge bzw. Vertiefungen (46) aufweisen.

7. Kettenglied nach Anspruch 6, **dadurch gekennzeichnet, dass** die Vorsprünge am Erweiterungsbügel (26,26a) oder an den Befestigungselementen (30,30a) angeordnet sind, und dass die Vertiefungen (46) am Rahmensteg (16,18) angeordnet sind.

8. Kettenglied für eine Energieführungskette mit zwei im Abstand zueinander angeordneten, sich in einer Längsrichtung zueinander parallel und in einer Höhenerstreckung von einer Unterseite (20) bis zu einer Oberseite (22) erstreckenden Seitengliedern (14), mit mindestens einem die Seitenglieder (14) miteinander verbindenden, quer zur Längsrichtung und zur Höhenerstreckung verlaufenden Rahmensteg (16,18) und mit einem über die Oberseiten (22) der Seitenglieder (14) überstehenden Erweiterungsbügel (26,26a) zur Aufnahme mindestens einer Leitung, welcher im Abstand zu den Seitengliedern (14) mit dem Rahmensteg (16) bzw. mit einem der Rahmenstege (18) lösbar verbunden ist und zwei freie Enden (34) aufweist, **dadurch gekennzeichnet, dass** die freien Enden (34) entweder auf dem jeweiligen Rahmensteg (18) aufgesetzt und jeweils mit einem Befestigungselement (30) lösbar verbunden sind, so dass der jeweilige Rahmensteg (18) rings umgriffen wird, oder dass die freien Enden (34) jeweils mit einem Befestigungselement (30a) lösbar verbunden sind, welches am jeweiligen Rahmensteg (16) befestigt ist, dass die Befestigungselemente (30,30a) und der mit dem Erweiterungsbügel (26,26a) verbundene Rahmensteg (16,18) miteinander in Eingriff befindliche Vorsprünge bzw. Vertiefungen (46) aufweisen, dass die Vorsprünge an den Befestigungselementen (30,30a) angeordnet sind, und dass die Vertiefungen (46) am Rahmensteg (16,18) angeordnet sind.

9. Kettenglied für eine Energieführungskette mit zwei im Abstand zueinander angeordneten, sich in einer Längsrichtung zueinander parallel und in einer Höhenerstreckung von einer Unterseite (20) bis zu einer Oberseite (22) erstreckenden Seitengliedern (14), mit mindestens einem die Seitenglieder (14) miteinander verbindenden, quer zur Längsrichtung und zur Höhenerstreckung verlaufenden Rahmensteg (16,18) und mit einem über die Oberseiten (22) der Seitenglieder (14) überstehenden Erweiterungsbügel zur Aufnahme mindestens einer Leitung, welcher im Abstand zu den Seitengliedern (14) mit dem Rahmensteg (16) bzw. mit einem der Rahmenstege (18) lösbar verbunden ist, **dadurch gekennzeichnet, dass** der Erweiterungsbügel und der mit dem Erweiterungsbügel verbundene Rahmensteg (16,18) miteinander in Eingriff befindliche Vorsprünge bzw. Vertiefungen (46) aufweisen, dass die Vorsprünge am Erweiterungsbügel angeordnet sind und dass die Vertiefungen (46) am Rahmensteg (16,18) angeordnet sind.

10. Energieführungskette mit mehreren, gelenkig miteinander verbundenen Kettengliedern, **dadurch gekennzeichnet, dass** zumindest ein Teil der Kettenglieder (12,12a) gemäß einem der vorangehenden Ansprüche ausgebildet ist.

11. Energieführungskette nach Anspruch 10, **dadurch gekennzeichnet, dass** jedes n-te Kettenglied ein Kettenglied (12,12a) nach einem der Ansprüche 1 bis 10 ist, wobei n eine natürliche Zahl ist.

## Claims

1. Chain link for a cable carrier chain having two side links (14) arranged at a distance to each other and extending in parallel to each other in a longitudinal direction and from a lower side (20) to an upper side (22) in a height extension, having at least one frame stay (16, 18) which connects the side links (14) to each other and which runs transversely to the longitudinal direction and to the height extension, and having an extension bracket (26, 26a) protruding over the upper sides (22) of the side links (14) to receive at least one cable which is connected releasably to the frame stay (16) or to one of the frame stays (18) at a distance to the side links (14), and has two free ends (34), **characterised in that** the free ends (34) are either set on the respective frame stay (18) and are each connected releasably to a fixing element (30) such that the respective frame stay (18) is encompassed in a ring, or that each free end (34) is connected releasably to a fixing element (30a) which is fixed to the respective frame stay (16), and that the connections between the free ends (34) and the fixing elements (30, 30a) each have two locking tongues (38) which bear a locking hook (36) on each of their free ends and transverse surfaces (42) which are engaged behind by the locking hooks (36).

2. Chain link according to Claim 1, **characterised in that** the extension bracket (26, 26a) is open to one side and encloses a receiving channel (32) for the at least one cable with the relevant frame stay (16, 18).

3. Chain link according to Claim 1 or 2, **characterised in that** the side links (14) are connected to one another by means of a lower and an upper frame stay (16, 18) which enclose a cable routing channel (24) which extends in the longitudinal direction together with the side links (14), and that the extension bracket (26) rests on the upper side (28) of the upper frame stay (18) which faces away from the cable routing channel (24)

4. Chain link according to Claim 1 or 2, **characterised in that** the side links (14) are connected to one another by means of a lower frame stay (16) and form an assembly having a U-shaped or H-shaped cross-section with the lower frame stay (16), and that the extension bracket (26a) rests on the lower frame stay (16) in the region between the side links (14).

5. Chain link according to Claim 4, **characterised in that** the extension bracket (26a) is connected to each of the two side links (14) each by means of an upper partial frame stay (52) which runs at a distance to the lower frame stay (16) and in parallel to this.

6. Chain link according to any one of the preceding claims, **characterised in that** the extension bracket (26, 26a) or the fixing elements (30, 30a) on the one side, and the frame stay (16, 18) connected to the extension bracket (26, 26a) on the other side, have protrusions or recesses (46) which engage with one another.

7. Chain link according to Claim 6, **characterised in that** the protrusions are arranged on the extension bracket (26, 26a) or on the fixing elements (30, 30a), and that the recesses (46) are arranged on the frame stay (16, 18).

8. Chain link for a cable carrier chain having two side links (14) arranged at a distance to each other and extending in parallel to each other in a longitudinal direction and from a lower side (20) to an upper side (22) in a height extension, having at least one frame stay (16,18) which connects the side links (14) to each other and which runs transversely to the longitudinal direction and to the height extension, and having an extension bracket (26, 26a) protruding over the upper sides (22) of the side links (14) to receive at least one cable which is connected releasably to the frame stay (16) or to one of the frame stays (18) at a distance to the side links (14), and has two free ends (34), **characterised in that** the free ends (34) are either set on the respective frame stay (18) and are each connected releasably to a fixing element (30) such that the respective frame stay (18) is encompassed in a ring, or that each free end (34) is connected releasably to a fixing element (30a) which is fixed to the respective frame stay (16), that the fixing elements (30, 30a) and the frame stay (16, 18) which is connected to the extension bracket (26, 26a) have protrusions or recesses (46) which engage with one other, that the protrusions are arranged on the fixing elements (30, 30a), and that the indentations (46) are arranged on the frame stay (16, 18).

9. Chain link for a cable carrier chain having two side links (14) arranged at a distance to each other and extending in parallel to each other in a longitudinal direction and from a lower side (20) to an upper side (22) in a height extension, having at least one frame stay (16, 18) which connects the side links (14) to each other and which runs transversely to the longitudinal direction and to the height extension, and having an extension bracket protruding over the upper sides (22) of the side links (14) to receive at least one cable which is connected releasably to the frame stay (16) or to one of the frame stays (18) at a distance to the side links (14), **characterised in that** the extension bracket and the frame stay (16, 18) which is connected to the extension bracket have protrusions or recesses (46) which engage with one another, that the protrusions are arranged on the extension bracket and that the recesses (46) are arranged on the frame stay (16, 18).

10. Cable carrier chain having several chain links which are connected supplely to one another, **characterised in that** at least one part of the chain links (12, 12a) is formed according to one of the preceding claims.

11. Cable carrier chain according to Claim 10, **characterised in that** each nth chain link is a chain link (12, 12a) according to one of claims 1 to 10, wherein n is a natural number.

## Revendications

1. Maillon de chaîne pour une chaîne de guidage d'énergie, avec deux éléments latéraux (14) disposés à distance entre eux, s'étendant parallèlement entre eux dans une direction longitudinale et depuis un côté inférieur (20) jusqu'à un côté supérieur (22) dans une direction verticale, avec au moins une entretoise de cadre (16, 18) reliant entre eux les éléments latéraux (14) et s'étendant transversalement à la direction longitudinale et à la direction verticale, et avec un étrier d'extension (26, 26a) dépassant des côtés supérieurs (22) des éléments latéraux (14) et destiné à recevoir au moins un câble, étrier qui est assemblé de manière amovible à l'entretoise de cadre (16) ou à une des entretoises de cadre (18) à distance des éléments latéraux (14) et qui présente deux extrémités libres (34), **caractérisé en ce que**, soit les extrémités libres (34) sont posées sur l'entretoise de cadre respective (18) et sont respectivement assemblées de manière amovible à un élément de fixation (30), de sorte que l'entretoise de cadre respective (18) est annulairement enserrée, soit les extrémités libres (34) sont respectivement assemblées de manière amovible à un élément de fixation (30a) qui est fixé sur l'entretoise de cadre respective (16), et **en ce que** les assemblages entre les extrémités libres (34) et les éléments de fixation (30, 30a) présentent respectivement deux languettes d'enclenchement (38), portant respectivement un crochet d'enclenchement (36) à leurs extrémités libres, et des surfaces transversales (42) derrière lesquelles s'engagent les crochets d'enclenchement (36).

2. Maillon de chaîne selon la revendication 1, **caractérisé en ce que** l'étrier d'extension (26, 26a) est ouvert vers un côté et forme avec l'entretoise de cadre correspondante (16, 18) un canal récepteur (32) pour le câble au moins unique.

3. Maillon de chaîne selon la revendication 1 ou 2, **caractérisé en ce que** les éléments latéraux (14) sont reliés entre eux au moyen d'une entretoise de cadre inférieure (16) et d'une entretoise de cadre supérieure (18), qui forment conjointement avec les éléments latéraux (14) un canal (24) de guidage de câble s'étendant en direction longitudinale, et **en ce que** l'étrier d'extension (26) repose sur le côté supérieur (28) de l'entretoise de cadre supérieure (18) qui est opposé au canal (24) de guidage de câble.

4. Maillon de chaîne selon la revendication 1 ou 2, **caractérisé en ce que** les éléments latéraux (14) sont reliés entre eux au moyen d'une entretoise de cadre inférieure (16) et forment avec l'entretoise de cadre inférieure (16) un module à section en U ou en H, et **en ce que** l'étrier d'extension (26a) repose sur l'entretoise de cadre inférieure (16) dans la région située entre les éléments latéraux (14).

5. Maillon de chaîne selon la revendication 4, **caractérisé en ce que** l'étrier d'extension (26a) est assemblé à chacun des deux éléments latéraux (14) au moyen d'une entretoise de cadre partielle supérieure respective (52) s'étendant à distance de l'entretoise de cadre inférieure (16) parallèlement à celle-ci.

6. Maillon de chaîne selon l'une des revendications précédentes, **caractérisé en ce que** l'étrier d'extension (26, 26a) ou les éléments de fixation (30, 30a) d'une part, et l'entretoise de cadre (16, 18) assemblée à l'étrier d'extension (26, 26a) d'autre part, présentent des saillies ou respectivement des renfoncements (46) qui se trouvent en prise mutuelle.

7. Maillon de chaîne selon la revendication 6, **caractérisé en ce que** les saillies sont disposées sur l'étrier d'extension (26, 26a) ou sur les éléments de fixation (30, 30a), et **en ce que** les renfoncements (46) sont disposés sur l'entretoise de cadre (16, 18).

8. Maillon de chaîne pour une chaîne de guidage d'énergie, avec deux éléments latéraux (14) disposés à distance entre eux, s'étendant parallèlement entre eux dans une direction longitudinale et depuis un côté inférieur (20) jusqu'à un côté supérieur (22) dans une direction verticale, avec au moins une entretoise de cadre (16, 18) reliant entre eux les éléments latéraux (14) et s'étendant transversalement à la direction longitudinale et à la direction verticale, et avec un étrier d'extension (26, 26a) dépassant des côtés supérieurs (22) des éléments latéraux (14) et destiné à recevoir au moins un câble, étrier qui est assemblé de manière amovible à l'entretoise de cadre (16) ou à une des entretoises de cadre (18) à distance des éléments latéraux (14) et qui présente deux extrémités libres (34), **caractérisé en ce que**, soit les extrémités libres (34) sont posées sur l'entretoise de cadre respective (18) et sont respectivement assemblées de manière amovible à un élément de fixation (30), de sorte que l'entretoise de cadre respective (18) est annulairement enserrée, soit les extrémités libres (34) sont respectivement assemblées de manière amovible à un élément de fixation (30a) qui est fixé sur l'entretoise de cadre respective (16), **en ce que** les éléments de fixation (30, 30a) et l'entretoise de cadre (16, 18) assemblée à l'étrier d'extension (26, 26a) présentent des saillies ou respectivement des renfoncements (46) qui se trouvent en prise mutuelle, **en ce que** les saillies sont disposées sur les éléments de fixation (30, 30a), et **en ce que** les renfoncements (46) sont disposés sur l'entretoise de cadre (16, 18).

9. Maillon de chaîne pour une chaîne de guidage d'énergie, avec deux éléments latéraux (14) disposés à distance entre eux, s'étendant parallèlement entre eux dans une direction longitudinale et depuis un côté inférieur (20) jusqu'à un côté supérieur (22) dans une direction verticale, avec au moins une entretoise de cadre (16, 18) reliant entre eux les éléments latéraux (14) et s'étendant transversalement à la direction longitudinale et à la direction verticale, et avec un étrier d'extension dépassant des côtés supérieurs (22) des éléments latéraux (14) et destiné à recevoir au moins un câble, étrier qui est assemblé de manière amovible à l'entretoise de cadre (16) ou à une des entretoises de cadre (18) à distance des éléments latéraux (14), **caractérisé en ce que** l'étrier d'extension et l'entretoise de cadre (16, 18) assemblée à l'étrier d'extension présentent des saillies ou respectivement des renfoncements (46) qui se trouvent en prise mutuelle, **en ce que** les saillies sont disposées sur l'étrier d'extension et **en ce que** les renfoncements (46) sont disposés sur l'entretoise de cadre (16, 18).

10. Chaîne de guidage d'énergie avec plusieurs maillons de chaîne reliés entre eux de manière articulée, **caractérisée en ce qu'**au moins une partie des maillons de chaîne (12, 12a) est configurée selon l'une des revendications précédentes.

11. Chaîne de guidage d'énergie selon la revendication 10, **caractérisée en ce que** chaque n-ième maillon de chaîne est un maillon de chaîne (12, 12a) selon l'une des revendications 1 à 10, n étant un entier naturel.
